# EUROPÄISCHE PATENTSCHRIFT

(11) **EP 1 883 496 B1**
(45) Veröffentlichungstag und Bekanntmachung des Hinweises auf die Patenterteilung: **18.02.2009**
(21) Anmeldenummer: 06753636.7
(22) Anmeldetag: 16.05.2006
(51) Int. Cl.: B23Q 1/00, F16L 27/08, B23Q 11/10, F16H 57/04

(54) **WERKZEUGMASCHINE MIT EINER DREHDURCHFÜHRUNG ZWISCHEN GETRIEBEABTRIEB UND SPINDEL**
MACHINE TOOL COMPRISING A ROTARY TRANSMISSION LEADTHROUGH BETWEEN THE DRIVEN GEAR AND THE SPINDLE
MACHINE-OUTIL COMPRENANT UN PASSAGE TOURNANT ENTRE UNE SORTIE DE TRANSMISSION ET UNE BROCHE

(30) Priorität: 18.05.2005 DE 102005022713
(43) Veröffentlichungstag der Anmeldung: 06.02.2008
(73) Patentinhaber: ZF Friedrichshafen AG, 88038 Friedrichshafen (DE)
(72) Erfinder: ECKERT, Harald, 88074 Meckenbeuren (DE)
(86) Internationale Anmeldenummer: PCT/EP2006/004595
(87) Internationale Veröffentlichungsnummer: WO 2006/122743

(56) Entgegenhaltungen:
- EP-A- 0 105 860
- WO-A-20/05011910
- WO-A-20/05108006
- WO-A1-00/63589
- DE-A1- 4 220 310
- DE-A1- 19 525 343
- DE-A1-5102004 003 68
- PATENT ABSTRACTS OF JAPAN Bd. 2003, Nr. 12, 5. Dezember 2003 (2003-12-05) & JP 2004 084692 A (EAGLE IND CO LTD), 18. März 2004 (2004-03-18)

## Beschreibung

Die vorliegende Erfindung betrifft ein Werkzeugmaschinengetriebe mit Antriebs- und Abtriebswelle und einer Spindel gemäß dem Oberbegriff des Patentanspruchs 1.

Aus dem Stand der Technik sind derartige Werkzeugmaschinengetriebe bekannt. Sie umfassen in der Regel ein zweistufiges Planetengetriebe und eine entsprechende Schalteinrichtung, wie sie z:B. im Rahmen der WO 00/63589 beschrieben ist, so dass zwischen dem Antrieb bzw. der Motorwelle und dem Abtrieb Drehzahldifferenzen in der Übersetzung entstehen. Hierbei erfolgt die Momentübertragung von der Abtriebswelle des Getriebes direkt auf die Spindel, wobei die Spindel vorzugsweise koaxial zur Abtriebswelle angeordnet ist. Bei derartigen Getrieben ist die Abtriebswelle mit der Spindel direkt verbunden; die verdrehfeste Verbindung zwischen Spindel und Abtriebswelle kann form- oder kraftschlüssig erfolgen. Hierbei entsteht die Notwendigkeit einer Übergabeeinrichtung für Kühlflüssigkeiten, Emulsionen, Öle oder Luft zwischen dem Getriebeabtrieb und der Spindel.

Aus der DE 42 20 310 C2 ist eine Arbeitsspindel einer Werkzeugmaschine bekannt, wobei die Spindel und die Lagerung der Spindel im Kopf der Werkzeugmaschine von einem Zwangskühlstrom beeinflusst werden, wobei die Strömungsmenge des Luftstromes proportional zur Drehzahl der Spindel ist und wobei zur Erzeugung des Luftstromes ein Turbinen- oder Düsenrad vorgesehen ist, welches mit der Spindel in Wirkverbindung steht.

Bei aus dem Stand der Technik bekannten Werkzeugmaschinengetrieben ist vorgeschlagen worden (ältere deutsche Patentanmeldung der Anmelderin DE 102 004 003 685.3), in die Getriebeabtriebswelle eine Drehdurchführung zu integrieren, die als Übergabeeinrichtung für Kühlflüssigkeiten, Emulsionen, Öle oder Luft zwischen Getriebeabtrieb und Spindel dient. Hierbei ist eine dynamische Dichtstelle zur Aufnahme der Volumenmengen und der daraus resultierenden Drücke vorgesehen. Die Drehdurchführung ist in der Abtriebswelle integriert und umfasst zwei Dichtscheiben, welche als Dichtstelle und als Einrichtung zur Aufnahme von Differenzdrehzahlen dienen. Die Dichtscheiben können in Abhängigkeit vom Medium, von den entstehenden Drücken und von den Volumenströmen unterschiedliche Werkstoffe enthalten und/oder unterschiedliche Geometrien und Befestigungen aufweisen.

Bei dieser Konstruktion wird durch die Integration der Drehdurchführung in der Abtriebswelle der Schwingwerteinfluß, bedingt durch die ungenaueren Abtriebswellenlager im Gegensatz zur Spindellagerung, in nachteiliger Weise beeinflusst.

Der vorliegenden Erfindung liegt die Aufgabe zugrunde, ein Werkzeugmaschinengetriebe mit Spindel anzugeben, bei dem die Momentübertragung von der Abtriebswelle des Getriebes direkt auf die Spindel erfolgt, umfassend eine Drehdurchführung zur Übergabe von Kühlflüssigkeiten, Emulsionen, Öle oder Luft zwischen Getriebeabtrieb und Spindel, bei dem der Schwingwerteinfluß im Vergleich zum Stand der Technik verbessert wird. Des weiteren soll eine einfache Montage gewährleistet werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Werkzeugmaschinengetriebe mit Spindel vorgeschlagen, bei dem die Momentenübertragung von der Abtriebswelle des Getriebes auf die Spindel direkt erfolgt, welches eine Drehdurchführung als Übergabeeinrichtung für Kühlflüssigkeiten, Emulsionen, Öle oder Luft zwischen Getriebeabtrieb und Spindel umfasst, bei dem die Drehdurchführung in die Spindel integriert ist.

Im Rahmen einer bevorzugten Ausführungsform der vorliegenden Erfindung ist die Drehdurchführung in der Spindel gelagert und umfasst zwei Dichtscheiben, welche als Dichtstelle und als Einrichtung zur Aufnahme von Differenzdrehzahlen dienen. Die Dichtscheiben können gemäß der Erfindung in Abhängigkeit vom Medium, von den entstehenden Drücken und von den Volumenströmen unterschiedliche Werkstoffe enthalten und/oder unterschiedliche Geometrien und Befestigungen aufweisen.

Gemäß einer vorteilhaften Weiterbildung der Erfindung umfasst die Drehdurchführung eine Feder oder ein Rückschlagventil, welche die Dichtscheiben zusammendrückt, so dass ein Druckanstieg des Mediums zu keiner bzw. zu einer sehr geringen Leckage führt. Um den Verschleiß der Dichtscheiben zu minimieren, können die zwei Dichtscheiben mittels einer weiteren Feder, auseinandergeführt werden, falls kein Medium fließt.

Die Drehdurchführung ist für den Fall, dass das Getriebe ein Planetengetriebe umfasst, mit der motorseitigen Dichtscheibe über ein Rohr, das Sonnenrad des Planetengetriebes und eine Nabe mit der Motorwelle bzw. Antriebswelle verbunden. Die spindelseitige Dichtscheibe kann direkt in der Spindel oder in einem zusätzlichen Verbindungsteil, beispielsweise in einer Kupplung angeordnet sein.

Im Rahmen einer vorteilhaften Weiterbildung kann in der Drehdurchführung ein Rückschlagventil zum Verhindern des Leerlaufens des Rohres und der Verbindungsleitungen im drucklosen Zustand vorgesehen sein.

Die Drehmomentübergabe von der Abtriebswelle auf die Spindel kann gemäß der Erfindung direkt über eine starre Buchse mit Keilwelle oder Passfedern oder über eine form- oder kraftschlüssige Kupplung erreicht werden.

Die erfindungsgemäße Anordnung der Drehdurchführung in der Spindel hat den Vorteil, dass die Rundlaufgenauigkeit der Spindel wesentlich exakter ist als die der Abtriebswelle. Dies ergibt eine geringere Unwucht durch die Masse der Drehdurchführung, was speziell bei hohen Drehzahlen einen erheb-lichen Vorteil darstellt.

Des weiteren ist es möglich, die Bauteile der Drehdurchführung direkt in die Spindel zu montieren oder diese vormontiert als "Tube" in die Spindel zu montieren, was in dem Vorteil der Vormontage, der Prüfbarkeit und der Eindeutigkeit des Verantwortungsbereiches bei Reklamationen resultiert.

Durch die erfindungsgemäße Konzeption ist die Dichtstelle außerhalb des Getriebes angeordnet, was in dem weiteren Vorteil resultiert, dass Leckagen zugelassen und direkt in einen Tank zurückgeführt werden können.

Die Erfindung wird im Folgenden anhand der beigefügten Figuren beispielhaft näher erläutert. Es zeigen:
- Figur 1: einen Schnitt durch ein Werkzeugmaschinengetriebe in Pla- netenbauweise, umfassend eine in die Spindel integrierte Drehdurchführung gemäß der Erfindung; und
- Figur 2: eine vergrößerte Ansicht der Drehdurchführung gemäß Fi- gur 1.

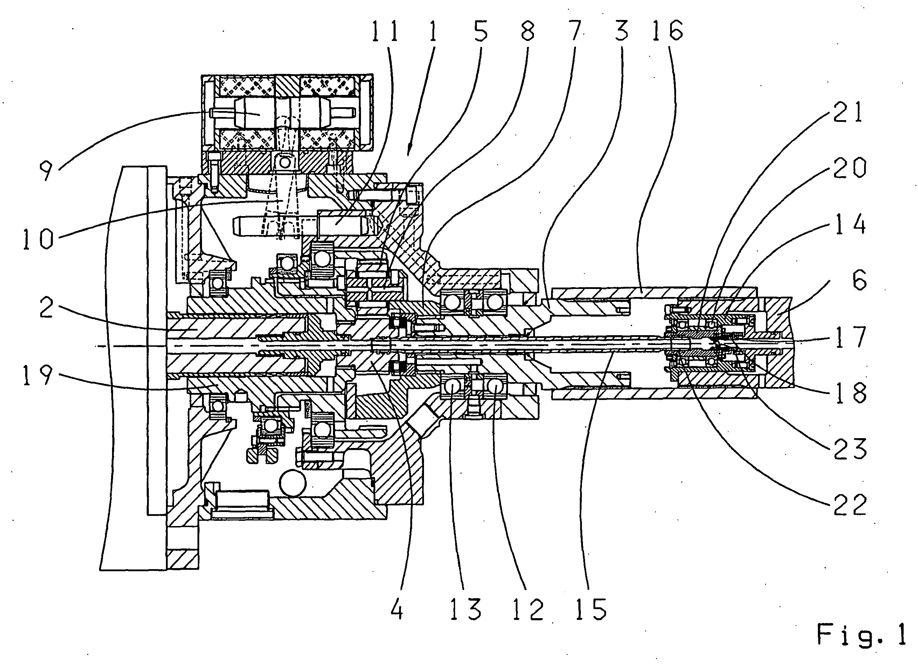

In Figur 1 ist ein Werkzeugmaschinengetriebe 1 dargestellt, welches in aus dem Stand der Technik bekannter Weise eine Antriebswelle 2, eine Abtriebswelle 3 und ein in Kraftflussrichtung zwischen der Antriebswelle und der Abtriebswelle angeordnetes zweistufiges Planetengetriebe umfasst, welches ein mit der Antriebswelle 2 verbundenes Sonnenrad 4, ein in einer Hohlradlagerung gelagertes Hohlrad 5 und einen Planetenträger 7 mit Planeten 8 auf-weist, der den Abtrieb des Planetengetriebes bildet.

Die Schalteinheit des Getriebes 1 umfasst einen Hubmagneten 9, welcher über eine Schaltwelle 11 auf eine Schaltgabel 10 wirkt. Die Abtriebswelle 3 ist bei dem gezeigten Ausführungsbeispiel mittels Lager 12, 13 gelagert und mit der Spindel 6 über eine starre Buchse 16 verbunden, die über eine Innenverzahnung in entsprechende Außenverzahnungen von Abtriebswelle 3 und Spindel 6 eingreift. Alternativ zu der starren Buchse 16 kann die Verbin-dung zwischen Abtriebswelle 3 und Spindel 6 über eine form- oder kraftschlüssige Kupplung erfolgen.

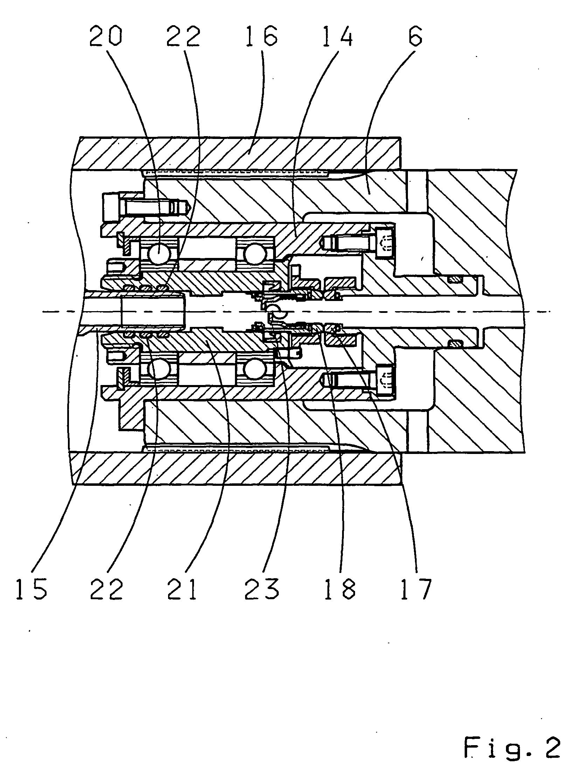

Gemäß der Erfindung und bezugnehmend auf Figuren 1 und 2 ist in die Spindel 6 eine Drehdurchführung 14 integriert, die als Übergabeeinrichtung für Kühlflüssigkeiten, Emulsionen, Öle oder Luft zwischen Getriebeantrieb 2 und Spindel 6 dient.

Die Drehdurchführung ist in der Spindel 6 gelagert und umfasst zwei Dichtscheiben 17, 18, welche als Dichtstelle und als Einrichtung zur Aufnahme von Differenzdrehzahlen dienen. Hierbei ist die Dichtscheibe 18 als motorseitige Dichtscheibe und die Dichtscheibe 17 als spindelseitige Dichtscheibe ausgebildet.

Die motorseitige Dichtscheibe 18 ist über ein Rohr 15, das Sonnenrad 4 und eine Nabe 19 mit der Motorwelle bzw. Antriebswelle 2 verbunden. Die spindelseitige Dichtscheibe 17 kann direkt in der Spindel 6 oder in einem zusätzlichen Verbindungsteil, beispielsweise in einer Kupplung, angeordnet sein.

Das Gehäuse der Drehdurchführung 14 ist vorzugsweise mittels einer Lagerung 20 gelagert, welche als Kugel-, Wälz-, Gleit- oder Hydrauliklagerung ausgebildet sein kann. Die Lagerabdichtung erfolgt über Spalt- oder Kontaktdichtungen.

Wie außerdem Figur 2 zu entnehmen ist, umfasst die Drehdurchführung 14 ein Rückschlagventil 23, welches ein Leerlaufen der Zuführleitung bzw. des Rohres 15 und der Verbindungsleitungen im drucklosen Zustand verhindert. Das Rückschlagventil 23 kann hierbei im drucklosen Zustand mittels einer Feder gehalten werden.

Das Rückschlagventil dient zum Anpresen der Dichtscheiben.

Im Rahmen weiterer nicht dargestellter Ausführungsformen der Erfindung kann in der Drehdurchführung eine Feder vorgesehen sein, welche die Dichtscheiben zusammendrückt.

Die Feder dient also zum Zurückdrücken des Rückschlagventils und damit zum definierten Abheben der Dichtscheiben. Ohne Feder werden die Dichtscheiben, bedingt durch den Taumelschlag, geringfügig auseinandergedrückt.

Da durch die erfindungsgemäße Anordnung der Dichtstelle außerhalb des Getriebes Leckagen zugelassen sind, ist zumindest ein Leckagerückfluss zu einem Tank (nicht dargestellt) vorgesehen.

## Patentansprüche

1. Werkzeugmaschinengetriebe mit Antriebs- und Abtriebswelle und einer Spindel, bei dem die Momentenübertragung von der Abtriebswelle des Getriebes auf die Spindel direkt erfolgt, welches eine Drehdurchführung als Übergabeeinrichtung für. Kühlflüssigkeiten, Emulsionen, Öle oder Luft zwischen Getriebeabtrieb und Spindel umfasst, **dadurch gekennzeichnet, dass** die Drehdurchführung (14) in die Spindel (6) integriert ist.

2. Werkzeugmaschinengetriebe nach Anspruch 1, **dadurch gekennzeichnet, dass** die Drehdurchführung (14) zwei Dichtscheiben (17, 18) umfasst, welche als Dichtstelle und als Einrichtung zur Aufnahme von Differenzdrehzahlen dienen, wobei die Dichtscheibe (18) als motorseitige Dichtscheibe und die Dichtscheibe (17) als spindelseitige Dichtscheibe ausgebildet ist.

3. Werkzeugmaschinengetriebe nach Anspruch 2, **dadurch gekennzeichnet, dass** in der Drehdurchführung (14) eine Feder vorgesehen ist, welche die Dichtscheiben (17, 18) zusammendrückt.

4. Werkzeugmaschinengetriebe nach Anspruch 2, **dadurch gekennzeichnet, dass** in der Drehdurchführung (14) eine Feder vorgesehen ist, über die die Dichtscheiben (17, 18) auseinandergeführt werden, wenn kein Medium fließt.

5. Werkzeugmaschinengetriebe nach einem der vorangehenden Ansprüche, **dadurch gekennzeichnet, dass** das Getriebe ein Planetengetriebe umfasst, wobei die motorseitige Dichtscheibe (18) über ein Rohr (15), das Sonnenrad (4) und eine Nabe (19) mit einer Motorwelle bzw. Antriebswelle (2) verbunden ist.

6. Werkzeugmaschinengetriebe nach Anspruch 5, **dadurch gekennzeichnet, dass** die spindelseitige Dichtscheibe (17) direkt in der Spindel (6) oder in einem zusätzlichen Verbindungsteil angeordnet ist.

7. Werkzeugmaschinengetriebe nach Anspruch 5, **dadurch gekennzeichnet; dass** ein Gehäuse der Drehdurchführung (14) mittels einer Lagerung (20) gelagert ist, welche als Kugel-, Wälz-, Gleit- oder Hydrauliklagerung ausgebildet ist.

8. Werkzeugmaschinengetriebe nach Anspruch 5, **dadurch gekennzeichnet, dass** in der Drehdurchführung (14) ein Rohr (21) vorgesehen ist, welches zum einen als Lagersitz und zum anderen als Aufnahme für Radialwellendichtringe oder Spaltdichtung dient, die der Abdichtung dienen.

9. Werkzeugmaschinengetriebe nach den Ansprüchen 5 und 7 bis 8, **dadurch gekennzeichnet, dass** die Drehdurchführung (14) ein Rückschlagventil (23) umfasst, welches ein Leerlaufen der Zuführleitung bzw. des Rohres (15) und der Verbindungsleitungen im drucklosen Zustand verhindert.

10. Werkzeugmaschinengetriebe nach Anspruch 9, **dadurch gekennzeichnet, dass** das Rückschlagventil (23) im drucklosen Zustand mittels einer Feder gehalten wird.

## Claims

1. Machine tool gear unit having a drive shaft and an output shaft and a spindle, in which machine tool gear unit the torque is transmitted directly from the output shaft of the gear unit to the spindle and which comprises a rotary transmission leadthrough as a transfer device for cooling liquids, emulsions, oils or air between the gear unit output and the spindle, **characterized in that** the rotary transmission leadthrough (14) is integrated in the spindle (6).

2. Machine tool gear unit according to Claim 1, **characterized in that** the rotary transmission leadthrough (14) comprises two sealing discs (17, 18) which serve as a sealing point and as a device for absorbing differential rotational speeds, the sealing disc (18) being designed as a motor-side sealing disc and the sealing disc (17) being designed as a spindle-side sealing disc.

3. Machine tool gear unit according to Claim 2, **characterized in that** a spring which presses the sealing discs (17, 18) together is provided in the rotary transmission leadthrough (14).

4. Machine tool gear unit according to Claim 2, **characterized in that** a spring via which the sealing discs (17, 18) are moved apart if no medium is flowing is provided in the rotary transmission leadthrough (14).

5. Machine tool gear unit according to one of the preceding claims, **characterized in that** the gear unit comprises an epicyclic gear unit, the motor-side sealing disc (18) being connected to a motor shaft or drive shaft (2) via a tube (15), the sun gear (4) and a hub (19).

6. Machine tool gear unit according to Claim 5, **characterized in that** the spindle-side sealing disc (17) is arranged directly in the spindle (6) or in an additional connecting part.

7. Machine tool gear unit according to Claim 5, **characterized in that** a housing of the rotary transmission leadthrough (14) is mounted by means of a bearing arrangement (20) which is designed as a ball, rolling-contact, plain or hydraulic bearing arrangement.

8. Machine tool gear unit according to Claim 5, **characterized in that** a tube (21) is provided in the rotary transmission leadthrough (14), said tube (21) serving firstly as a bearing seat and secondly as a receptacle for radial shaft seals or a gap seal which serve/serves for the sealing.

9. Machine tool gear unit according to Claims 5 and 7 to 8, **characterized in that** the rotary transmission leadthrough (14) comprises a non-return valve (23) which prevents the feed line or the tube (15) and the connecting lines from running dry in the unpressurized state.

10. Machine tool gear unit according to Claim 9, **characterized in that** the non-return valve (23) is held in the unpressurized state by means of a spring.

## Revendications

1. Transmission de machine-outil comprenant un arbre d'entraînement et un arbre de sortie et une broche, le transfert de couple de l'arbre de sortie de la transmission à la broche s'effectuant directement, qui comprend un passage tournant servant de dispositif de transfert pour des liquides de refroidissement, des émulsions, des huiles ou de l'air entre la sortie de la transmission et la broche, **caractérisée en ce que** le passage tournant (14) est intégré dans la broche (6).

2. Transmission de machine-outil selon la revendication 1, **caractérisée en ce que** le passage tournant (14) comprend deux disques d'étanchéité (17, 18) qui servent de point d'étanchéité et de dispositif pour recevoir des vitesses de rotation différentes, le disque d'étanchéité (18) étant réalisé sous forme de disque d'étanchéité du côté du moteur et le disque d'étanchéité (17) étant réalisé sous forme de disque d'étanchéité du côté de la broche.

3. Transmission de machine-outil selon la revendication 2, **caractérisée en ce qu'**un ressort est prévu dans le passage tournant (14), lequel comprime les disques d'étanchéité (17, 18).

4. Transmission de machine-outil selon la revendication 2, **caractérisée en ce qu'**un ressort est prévu dans le passage tournant (14), lequel permet d'écarter l'un de l'autre les disques d'étanchéité (17, 18) lorsqu'il ne s'écoule aucun fluide.

5. Transmission de machine-outil selon l'une quelconque des revendications précédentes, **caractérisée en ce que** la transmission comprend un engrenage planétaire, le disque d'étanchéité (18) du côté du moteur étant connecté, par le biais d'un tube (15), de la roue solaire (4) et d'un moyeu (19), à un arbre de moteur ou un arbre d'entraînement (2).

6. Transmission de machine-outil selon la revendication 5, **caractérisée en ce que** le disque d'étanchéité (17) du côté de la broche est disposé directement dans la broche (6) ou dans une partie de connexion supplémentaire.

7. Transmission de machine-outil selon la revendication 5, **caractérisée en ce qu'**un boîtier du passage tournant (14) est supporté au moyen d'un support sur palier (20), qui est réalisé sous forme de support sur palier à billes, à rouleaux, lisse ou hydraulique.

8. Transmission de machine-outil selon la revendication 5, **caractérisée en ce qu'**un tube (21) est disposé dans le passage tournant (14), lequel sert d'une part de siège de palier et d'autre part de logement pour des joints à lèvres radiales ou un joint d'étanchéité, qui servent à assurer l'étanchéité.

9. Transmission de machine-outil selon les revendications 5 et 7 à 8, **caractérisée en ce que** le passage tournant (14) comprend une soupape de non-retour (23) qui empêche une marche à vide de la conduite d'alimentation ou du tube (15) et des conduites de connexion dans l'état non pressurisé.

10. Transmission de machine-outil selon la revendication 9, **caractérisée en ce que** la soupape de non-retour (23) est maintenue dans l'état non pressurisé au moyen d'un ressort.
